# EUROPÄISCHE PATENTSCHRIFT

(11) **EP 0 809 930 B1**
(45) Veröffentlichungstag und Bekanntmachung des Hinweises auf die Patenterteilung: **08.08.2001**
(21) Anmeldenummer: 97107967.8
(22) Anmeldetag: 15.05.1997
(51) Int. Cl.: A01F 15/07

(54) **Rundballenpresse**
Rotobaler
Presse à balles rondes

(30) Priorität: 29.05.1996 DE 29609555 U
(43) Veröffentlichungstag der Anmeldung: 03.12.1997
(73) Patentinhaber: Greenland GmbH & Co. KG, 78244 Gottmadingen (DE)
(72) Erfinder: Schefers, Wilhelm, 41462 Neuss (DE)
(74) Vertreter: Grünecker, Kinkeldey, Stockmair & Schwanhäusser Anwaltssozietät

(56) Entgegenhaltungen:
- EP-A- 0 225 398
- EP-A- 0 293 025
- US-A- 5 109 652
- US-A- 5 129 208
- US-A- 5 216 873
- US-A- 5 433 059

## Beschreibung

Die Erfindung betrifft eine Rundballenpresse der im Oberbegriff des Patentanspruchs 1 angegebenen Art.

In auf dem Markt befindlichen Rundballenpressen GP 2.30 und GP 2.50 der Fa. Deutz-Fahr, Köln, DE (beschrieben in der Broschüre "Servicetraining" Netzbindung GP 2.30/GP 2.50 der Fa. Deutz-Fahr, S. E41 bis E55) hat der Stelltrieb die Aufgabe, die Einzugswalze einzukuppeln, eingekuppelt zu halten und wieder abzukuppeln, aber auch den Netztrenner in die Ausgangsstellung zu bringen bzw. zu spannen. Da zum Spannen eine erhebliche Leistung erforderlich ist, wird ein teurer, schwerer und voluminöser Stelltrieb benötigt. Die Bewegung der Sperrvorrichtung aus der Sperrstellung in die Freigabestellung wird in Abhängigkeit von der Zuführlänge des Netzes durch einen aufwendigen und vielteiligen Mechanismus gesteuert, der über einen Kurbeltrieb die Drehbewegung der Einzugswalze mechanisch abgreift und ein die Zuführlänge des Netzes bestimmendes Meßsegment enthält. Die Zuführlänge wird manuell durch Verstellen eines Abkippunktes des Meßsegments eingestellt.

Bei einer bekannten Rundballenpresse RP 200 der Fa. Welger wird der Netztrenner mittels eines Hydraulikzylinders gespannt. Die Einzugswalze wird über eine elektromagnetische Schaltkupplung angetrieben, bis das vom Ballen mitgenommene Netz die Einzugswalze mitnimmt. Die Verstellung der Sperrvorrichtung aus der Sperrstellung in die Freigabestellung wird durch einen aufwendigen Mechanismus mit einem schwenkbaren Meßsegment gesteuert, das durch die Drehbewegung der Einzugswalze verstellt wird. Der Mechanismus ist aufwendig, vielteilig und beansprucht relativ viel Einbauraum. Die Einstellung der Zuführlänge erfolgt manuell durch Verstellen des Kippunktes des Meßsegmentes.

Aus EP-A-0 293 025 ist eine Rundballenpresse bekannt, bei der der Stelltrieb zum Ein- und Auskuppeln der Einzugswalze ein Schneidmesser zwischen einer Passivposition und einer Schneidposition hin- und herverstellt. In der Passivposition des Schneidmessers geht das Netz unbeeinflußt durch. In der Schneidposition des Schneidmessers wird die aufgebaute Zugspannung im Netz eingesetzt, das Netz abzutrennen. Der Stelltrieb führt einen einzigen Stellhub aus, über den eine Spannrolle entweder in die Kuppelstellung oder in die Lösestellung gelangt. Bei der jeweiligen Bewegung des Stelltriebs in die Lösestellung wird über einen Lenker ein Element verdreht, das die Schneidklinge mitnimmt.

Weiterer Stand der Technik zu Netz-Bindevorrichtungen ist enthalten in: US-A-5 433 059, EP-A-0 225 398, US-A-5 129 208, US-A-5 109 652 und US-A-5 216 873.

Der Erfindung liegt die Aufgabe zugrunde, eine Rundballenpresse der eingangs genannten Art mit einer baulich und vor allem steuerungstechnisch einfachen, funktionssicheren und bequem zu handhabenden Netz-Bindevorrichtung auszustatten.

Die gestellte Aufgabe wird mit den Merkmalen des Patentanspruchs 1 gelöst.

Erfindungsgemäß wird der Stelltrieb dazu verwendet, nicht nur das Ein- und Abkuppeln der Einzugswalze zu steuern, sondern auch die Verstellung der Sperrvorrichtung aus der Sperrstellung in die Freigabestellung auszulösen, sobald er einen vorbestimmten Verstellhub ausgeführt hat, bei dem zumindest die Einzugswalze eingekuppelt worden ist.

Mit der durch Anspruch 2 konstruktiv vorgenommenen Abkehr von den bekannten Prinzipien, entweder den Stelltrieb für das Spannen des Netztrenners und das Ein- und Abkuppeln der Einzugswalze zu verwenden und die Steuerung der Sperrvorrichtung mittels eines aufwendigen Mechanismus durchzuführen, oder für die drei Funktionen: Spannen, Ein- und Abkuppeln, Zuführlänge begrenzen, getrennte Einrichtungen zu benutzen, wird ein einfacher baulicher Aufbau mit wenigen Einzelteilen, geringem Bauraum, hoher Funktionssicherheit und vor allem einer einfachen, präzisen und bequemen Steuerbarkeit erzielt. Da der Stelltrieb der Aufgabe des Spannens des Netztrenners enthoben ist, läßt sich ein kleinbauender, leichter und kostengünstiger Stelltrieb benutzen, der sich durch hohe Steuerpräzision und moderaten Energieverbrauch auszeichnet. Bei einfacher Steuerung des Stelltriebs läßt sich die Sperrvorrichtung präzise betätigen. Die steuerungstechnisch bequem einstellbare Zuführlänge des Netzes wird exakt eingehalten.

Um die relativ große Spannkraft für den Netztrenner aufzubringen, ist gemäß Anspruch 3 ein Rückholer, vorzugsweise ein Hydraulikzylinder, vorgesehen, der - da er nur für diese Funktion benötigt wird - einfach, kräftig und robust ist.

Gemäß Anspruch 4 kann der Stelltrieb die Sperrvorrichtung direkt, d.h. durch direkten formschlüssigen Angriff an der Sperrvorrichtung, oder indirekt betätigen, d.h. zweckmäßigerweise über eine zum Ein- und Abkuppeln der Einzugswalze ohnedies verstellbare Komponente der Bindevorrichtung.

Gemäß Anspruch 5 wird eine eigenständige Vorrichtung benutzt, um die Trennvorrichtung auszulösen, damit sie unter ihrer Federspannung das Netz durchschlägt. Diese Vorrichtung wird aktiviert durch den Stellhub des Stelltriebes, mit dem die Einzugswalze eingekuppelt wird. Ab diesem Aktivierzeitpunkt wird die abgezogene Netzlänge gemessen, ehe bei Erreichen einer vorbestimmten abgezogenen Netzlänge die Vorrichtung die Trennvorrichtung auslöst.

Bei der Ausführungsform gemäß Anspruch 6 wird der Hub des Stelltriebs, zweckmäßigerweise eines handelsüblichen Linearmotoraggregats, in einer Stellrichtung für das Ein- und Abkuppeln der Einzugswalze, und in der anderen Stellrichtung zum Betätigen der Sperrvorrichtung und damit zum Begrenzen der Zuführlänge benutzt. Die beiden vom Stelltrieb angeführten, unterschiedlichen Funktionen beeinträchtigen einander nicht. Ein aufwendiger Zusatzmechanismus, der die Bewegung der Einzugswalze mechanisch abgreift, die Zuführlänge begrenzt und die Sperrvorrichtung betätigt, entfällt.

Gemäß Anspruch 7 ist baulich einfach und zuverlässig, der Stellhebel auch für die zweite Funktion der Betätigung der Sperrvorrichtung mit herangezogen, was die Anzahl der Einzelteile reduziert.

Gemäß Anspruch 8 wird in Hochrichtung kostbarer Platz gespart. Die Steuerkurve greift mit günstigem Hebelarm an der Sperrklinke an, vorzugsweise mit einem das Lösen der Sperrklinke begünstigenden Winkel, so daß der Stelltrieb keine große Kraft aufzubringen braucht und der Auslösepunkt exakt reproduzierbar ist.

Gemäß Anspruch 9 ist die Sperrklinke einfach und platzsparend unterbringbar. Sie wird durch die Feder jeweils in die Sperrlage gebracht, und zum richtigen Zeitpunkt durch die Steuerkurve des Stellhebels in die Freigabestellung gedrückt.

Gemäß Anspruch 10 wird der Rückholer durch die Stift-Schlitzkupplung gegenüber der schlagartigen Bewegung des Messerhebels entkoppelt.

Gemäß Anspruch 11 werden guter Bedienungskomfort und gesteigerte Betriebssicherheit erreicht. An der Steuervorrichtung läßt sich über die Zeitschaltung die Zeitspanne einstellen, über welche die Einzugswalze mit der z.B. von einer Preßwalze abgeleiteten Drehbewegung angetrieben ist und das Netzende so weit einführt, daß eine sichere Mitnahme des Netzes durch den Ballen gewährleistet ist. Dann entkuppelt der Stelltrieb die Einzugswalze, die mit dem abgezogenen Netz weiterläuft. Die Meßvorrichtung ermittelt aufgrund der Drehsignale der Einzugswalze die momentane Zuführlänge und steuert den Stelltrieb oder die Sperrvorrichtung an, sobald die eingestellte Zuführlänge erreicht ist, um die Sperrvorrichtung zu lösen und das Netz abzutrennen. Alle Funktionen der Bindevorrichtung können zentral an der Steuervorrichtung eingestellt und veranlaßt werden, entweder direkt an der Rundballenpresse oder im Zugfahrzeug der Rundballenpresse. Es können an die Steuervorrichtung weitere Signalgeber angeschlossen sein, die z.B. das Erreichen des das Fertigstellen des Ballens repräsentierenden Ballendrucks oder eines Anfangsöffnungshubs der Ausstoßklappe unter dem Ballenreaktionsdruck, den Stillstand der Rundballenpresse, das Auswerfen des eingebundenen Rundballens, Meldungen über den Zustand des Netzzuführ- und Speichersystems, und dgl., übermitteln.

Anhand der Zeichnungen wird eine Ausführungsform des Erfindungsgegenstandes erläutert. Es zeigen:
- Fig. 1: eine schematische Seitenansicht, einer Rundballenpresse mit einer Netz-Bindevorrichtung,
- Fig. 2: einen Vertikalschnitt der Bindevorrichtung, als Durchsicht,
- Fig.3-5: zugehörige Ansichten eines Details,
- Fig. 6: eine vergrößerte Seitenansicht kooperierender Komponenten, und
- Fig. 7: ein Blockdiagramm mit Komponenten der Bindevorrichtung, die an eine Steuervorrichtung angeschlossen sind, wobei eine wietere Ausführungsform angedeutet ist.

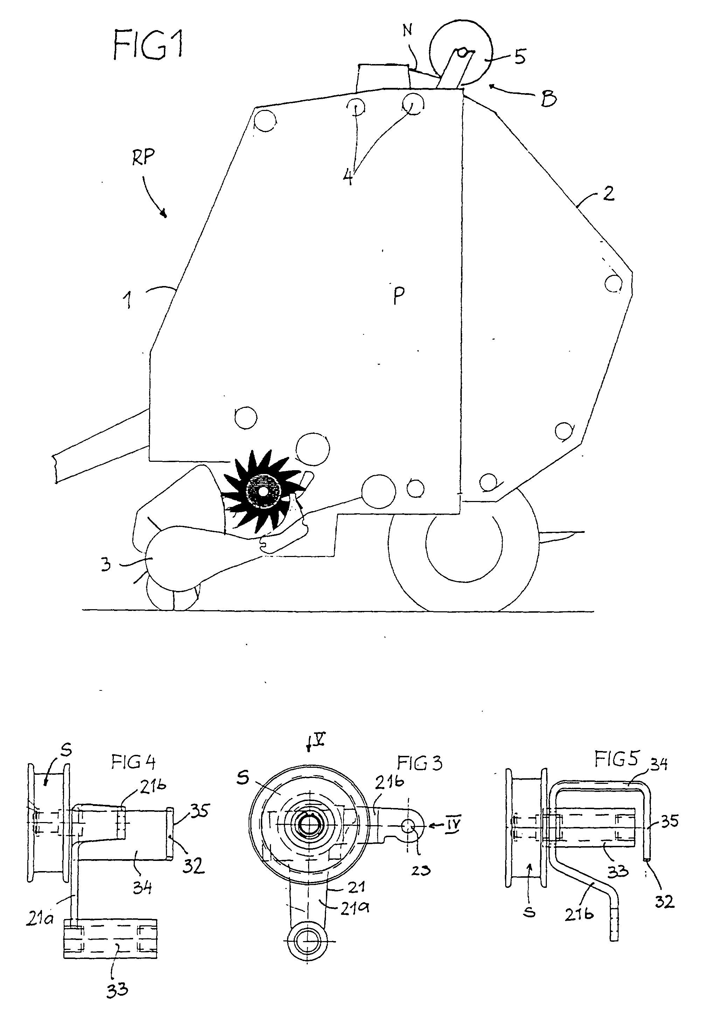

Eine Rundballenpresse RP gemäß Fig. 1 weist ein fahrbares Gehäuse 1 mit einer zu öffnenden Ausstoßklappe 2 und einer Pick-up-Vorrichtung 3 zum Aufnehmen des Ernteguts auf, das in einer im Gehäuse zumindest von Preßwalzen 4 begrenzten Preßkammer P zu einem Rundballen gewickelt und dabei verdichtet wird. Der fertige Rundballen wird in ein Bindenetz (Netz N) eingebunden und ausgestoßen. Zum Einbinden des Rundballens in das Bindenetz N ist eine Netz-Bindevorrichtung B an der Rundballenpresse RP vorgesehen (gegebenenfalls zusammen mit einer Garnbindevorrichtung; nicht gezeigt). Die Bindevorrichtung B befindet sich im Bereich eines nicht gezeigten Zuführspalts zur Preßkammer P und ist in Fig. 1 schematisch mit einer Rolle 5 des Netzes N angedeutet.

Das von der Rolle 5 kommende Netz N wird in Fig. 2 von einer antreibbaren Einzugswalze W, an der eine über einen Hebel 14 und eine Feder 15 federbelastete Gegenrolle 6 anliegt, zum, vorzugsweise strukturierten, Umfang der Preßwalze 4 gebracht, die entgegen dem Uhrzeigersinn angetrieben ist und das zugeführte Netz N an den die Preßwalzen 4 berührenden, nicht gezeigten Rundballen anlegt, damit dieser bei seiner Drehbewegung das Netz N mitnimmt und sich selbsttätig einbindet. Dann wird eine vorbestimmte Zuführlänge des Bindenetzes N abgespult, ehe mit einem Netztrenner (Schlagmesser 8, stationärem Amboß 7) das Netz N abgetrennt wird. Das Schlagmesser 8 sitzt an gebogenen Messerhebeln 9, die an einer Messerhebelwelle 10 schwenkbeweglich gelagert sind und, z.B. über einen Kniegelenkmechanismus 11 und eine Zugfeder 12, aus der gezeigten, gespannten Bereitschaftslage schlagartig verschwenkt werden, sobald eine Sperrvorrichtung K, die die Messerhebel 9 in der dargestellten Bereitschaftsstellung hält, in die Freigabestellung gebracht wird.

Die Einzugswalze W ist auf einer Drehachse 13 drehbar. Sie ist zum anfänglichen Zuführen des Bindenetzes N zur Drehung in Förderrichtung antreibbar, und zwar mittels eines Riemens R, der über die in Fig. 2 obere Preßwalze 4 angetrieben wird. Der Riemen R ist zwischen einer Schlupfstellung, in der die Einzugswalze W nicht angetrieben ist, und einer Kuppelstellung (gestrichelt angedeutet) verstellbar, in der er die Einzugswalze W antreibt. Zum Verstellen des Riemens R ist eine Spannrolle S auf einem Stellhebel 21 gelagert, der um eine stationäre Achse 22 schwenkbar ist. Zum Schwenken des Stellhebels 21 ist ein Stelltrieb M, vorzugsweise ein Linearmotoraggregat vorgesehen, das einen aus- und einfahrbaren Stößel 24 aufweist, der bei 23 am Stellhebel 21 angelenkt ist. Der Stelltrieb M ist bei 25 schwenkbar an einer Tragplatte 29 der Bindevorrichtung B gelagert, an der auch weitere Komponenten abgestützt sind. Zur Steuerung und Energieversorgung ist der Stelltrieb M bei 26 an ein Kabel angeschlossen.

Die Sperrvorrichtung K zum Halten der Messerhebel 9 in der gespannten (gestrichelten) Lage weist wenigstens eine als flacher Hebel ausgebildete Sperrklinke 27 auf, die um eine Achse 28 auf- und abschwenkbar ist und durch eine Feder 37 im Uhrzeigersinn beaufschlagt wird. Die Sperrklinke 27 befindet sich hinter der Tragplatte 29, während der Stellhebel 21 vor der Tragplatte 29 angeordnet ist. Ein hakenartiges freies Ende 31 der Sperrklinke 27 greift in der Bereitschaftsstellung der Messerhebel 9 hinter eine an wenigstens einem Messerhebel 9 angeordnete Nase 36 und erstreckt sich weiter durch einen Ausschnitt 30 der Tragplatte 29 in den Bewegungsbereich eines Auslöseelementes 32 des Stellhebels 21 zur Vorderseite der Tragplatte 29. Durch eine über den Stelltrieb M ausführbare Bewegung des Stellhebels 21 im Uhrzeigersinn wird die Sperrklinke 27 aus der dargestellten Sperrstellung, in der sie die Nase 36 hintergreift, in eine entgegen dem Uhrzeigersinn nach unten geschwenkte, die Nase 36 freigebende Freigabestellung verstellt, und zwar mittels des Löseelements 32 des Stellhebels 21.

Um die Spannrolle S in die Kuppelstellung zu bringen, in der der Riemen R in die gestrichelte, gespannte Lage gebracht wird und die Einzugswalze W mitnimmt, wird der Stellhebel 21 mittels des Stelltriebs M entgegen dem Uhrzeigersinn aus der gezeigten Lage verschwenkt. Diese Verschwenkung hat keinen Einfluß auf die Stellung oder Bewegung der Sperrklinke 27, weil diese bei der gezeigten Ausführungsform erst durch eine über den Stelltrieb M eingesteuerte zusätzliche Schwenkbewegung des Stellhebels 21 aus der dargestellten Lage im Uhrzeigersinn beaufschlagt wird.

An wenigstens einem Messerhebel oder an der die Messerhebel 9 lagernden Messerwelle 10 ist ein sektorförmiges Stellglied 16 drehfest angebracht, das einen zur Messerwelle 10 konzentrischen Bogenschlitz 17 enthält, in den ein Mitnehmerzapfen 18 eines Rückholers 19 eingreift, zweckmäßigerweise eines Hydraulikzylinders, der z.B. bei 20 in der Tragplatte 29 schwenkbar gelagert ist.

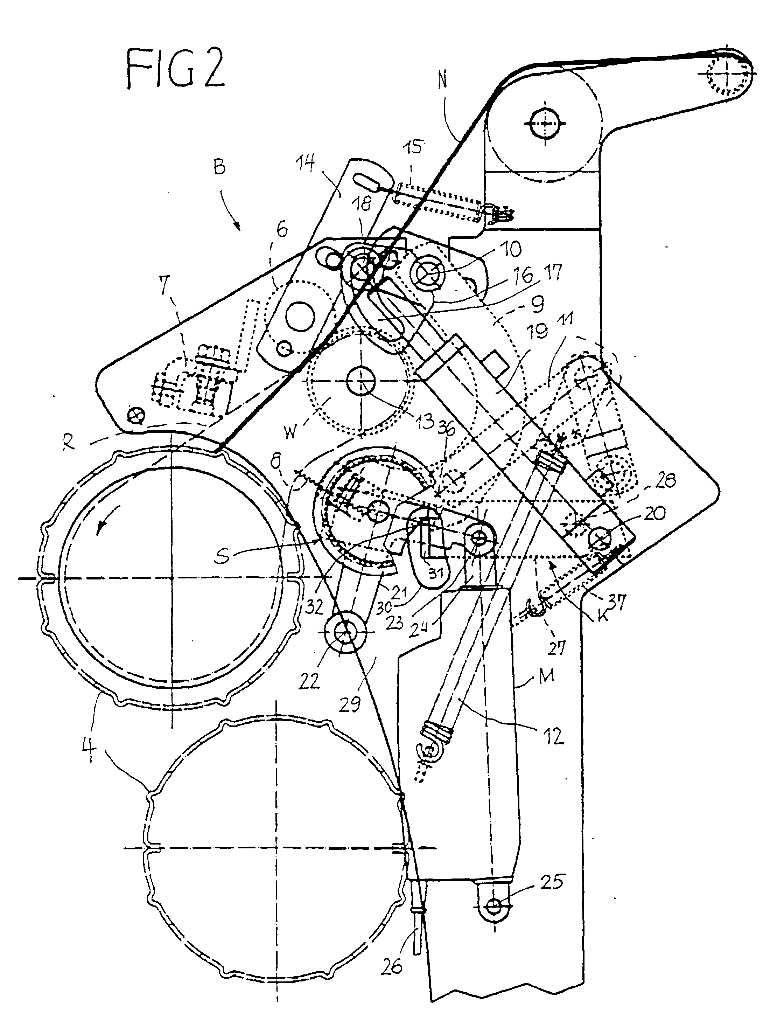

Gemäß den Fig. 3, 4 und 5 (Fig. 4 ist eine Ansicht in Richtung des Pfeils IV; Fig. 5 ist eine Ansicht in Richtung des Pfeils V, jeweils in Fig. 3) ist der Stellhebel 21 ein Winkelhebel mit zwei Hebelteilen 21a und 21b, die miteinander unter etwa 90° verbunden sind. Am Hebelteil 21a ist gemäß Fig. 4 eine Lagerbuchse 33 befestigt. In etwa im Bereich der Beuge des Winkelhebels ist die Spannrolle S drehbar gelagert. Der andere Hebelteil 21b ist abgekröpft und mit einem gemäß Fig. 5 in etwa U-förmigen Seitenhebel 34 einstückig ausgebildet, dessen in etwa parallel zum Hebelteil 21 b liegendes, umgebogenes Ende 35 als Löseelement für die Sperrklinke eine hier konkave Sperrklinken-Steuerkurve 32 trägt. Die Steuerkurve 32 befindet sich zwischen der Achse der Spannrolle S und der Anlenkstelle 23 des Stelltriebs M am Hebelteil 21b. Der Stellhebel 21 ist z.B. ein aus Bandmaterial hergestelltes Biegeteil.

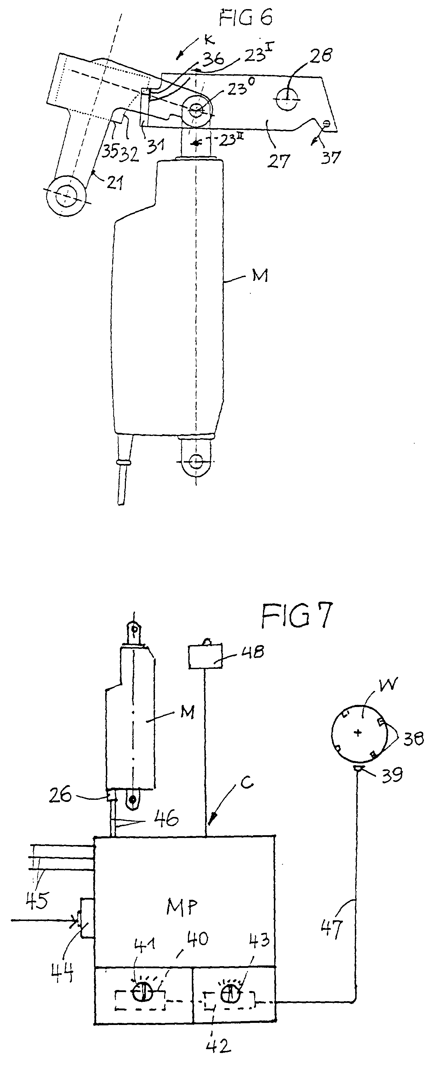

Fig. 6 verdeutlicht die Zusammenarbeit zwischen dem Stellhebel 21 und der Sperrklinke 27. Der Stelltrieb M ist steuerungsseitig so angetrieben, daß er normalerweise eine Nullposition 23° einnimmt (Fig. 6), und aus der Nullposition 23° in eine Kuppelposition 23' bzw. in eine Endposition 23" verstellbar ist. Bei der Bewegung des Stelltriebs M aus der Nullposition 23° in die Kuppelposition 23' spannt die Spannrolle S den Riemen R, um die Einzugswalze W anzutreiben. In der Nullposition 23° ist die Einzugswalze W abgekuppelt. Die Sperrklinke 27 befindet sich in der Sperrstellung, in der sie die Nase 36 hintergreift. Bei der Bewegung des Stelltriebs M aus der Nullposition 23° in die Endposition 23" wird die Sperrklinke 27 mittels der Steuerkurve 32 aus der Sperrstellung in eine Freigabestellung (nicht gezeigt) bewegt, in der sie von der Nase 36 abgleitet, und die Bewegung der Messerhebel 9 zum Abtrennen des Netzes zuläßt. In der Endposition 23" kann der Stelltrieb M ferner steuerungsseitig kalibriert werden, um bei der nächten Operation die vorbestimmten Positionen exakt aufzufinden. Sobald die Messerhebel 9 verschwenkt sind (in Fig. 2 im Uhrzeigersinn), bewegt der Stelltrieb M die Anlenkstelle 23 in die Nullposition 23°, so daß die Sperrklinke 27 freikommt und beim späteren Spannen der Messerhebel 9 unter der Kraft der Feder 37 hinter die Nase 36 springt.

Fig. 7 verdeutlicht schematisch eine Steuervorrichtung C für die Bindevorrichtung B. Die Steuervorrichtung C ist elektronisch und vorzugsweise mit einem Mikroprozessor MP ausgebildet. Zweckmäßigerweise sind an der Einzugswalze W Drehpositionsgeber 38 vorgesehen, die mittels eines Drehmelders 39 abgetastet werden, der das Ausmaß der Drehbewegung der Einzugswalze W repräsentierende Signale über eine Leitung 47 an eine Zuführlängen-Meßvorrichtung 42 in der Steuervorrichtung C übermittelt. Ein Einstellelement 43 dient zum Einstellen der Zuführlänge. Ferner ist in der Steuervorrichtung C eine Zeitschaltung 40 vorgesehen, die über ein Einstellorgan 41 einstellbar ist und die Zeit bestimmt, während welcher die Spannrolle S den Riemen R spannt. Zweckmäßigerweise ist diese Zeit so gewählt, daß das freie Ende des Netzes N zuverlässig zur Mitnahme durch den Ballen zwangszugeführt wird. Ferner ist ein Einschalter 44 vorgesehen, z.B. an der Steuervorrichtung C oder an geeigneter Stelle der Rundballenpresse RP und/oder im Zugfahrzeug. Weitere Signalleitungen 45 können Signale über den das Fertigstellen des Rundballens repräsentierenden Ballendruck, einen Öffnungshub der Ausstoßklappen, das Anhalten der Rundballenpresse RP für einen Bindevorgang und die ordnungsgemäße Funktionsfähigkeit der Bindevorrichtung B an die Steuervorrichtung C liefern oder/und weitere wichtige Informationen. Der Stelltrieb M ist über Leitungen 46 mit der Steuervorrichtung C verbunden. Die Einstellorgane 41 und 43 können entweder an der Steuervorrichtung C, der Rundballenpresse RP oder im zugehörigen Zugfahrzeug vorgesehen sein.

Bei Fertigstellung eines Rundballens in der Preßkammer P, was durch das Erreichen und Abtasten eines repräsentativen Ballenreaktionsdrucks oder Öffnungshubs der Ausstoßklappe festgestellt werden kann, befindet sich das freie Ende des Netzes N in etwa in der in Fig. 2 gezeigten Position an der Preßwalze 4. Die Messerhebel 9 sind gespannt und durch die Sperrklinke 27 in der Sperrstellung gehalten. Die Spannrolle S läßt den Riemen R entspannt. Die Einzugswalze W dreht sich nicht. Der Stelltrieb M befindet sich in der Nullposition 23°. Der Rückholer 19 ist ausgefahren, so daß sich der Bolzen 18 in etwa in der gezeigten Lage befindet. Durch Betätigen des Einschalters 44 wird ein Bindevorgang eingeleitet. Der Stelltrieb M bewegt die Anlenkstelle 23 aus der Nullposition 23° in die Kupplungsposition 23'. Die Spannrolle S spannt den Riemen R. Die Einzugswalze W fördert das Netz N zur Preßwalze 4, so daß es mit dieser in die Preßkammer P gelangt. Die Aufnahme der Drehbewegung der Einzugswalze W kann über den Drehmelder 39 registriert werden. Der Stelltrieb M hält die Spannrolle S über die in der Zeitschaltung 4 eingestellte Zeitdauer in der Kuppelstellung 23', bis sicher ist, daß das Netz N ordnungsgemäß vom Ballen mitgenommen wird. Nach Ablauf der eingestellten Zeitdauer wird der Stelltrieb M in die Nullposition 23° zurückgestellt. Die Zuführlängen-Meßvorrichtung 42 beginnt oder hat begonnen, die Zuführlänge zu messen, und zwar anhand der Drehsignale der Einzugswalze W. Ist die eingestellte Zuführlänge erreicht, oder kurz davor, dann wird von der Steuervorrichtung C ein weiteres Steuersignal an den Stelltrieb M übermittelt, der aus seiner Nullposition 23° in Richtung auf die Endposition 23" verstellt wird, und dabei über den Stellhebel 21 und die Steuerkurve 32 die Sperrklinke 27 von der Nase 36 weg in die Freigabestellung bewegt. Sobald die Nase 36 freigekommen ist, zieht die Feder 12 über den Kniegelenkmechanismus 11 die Messerhebel 9 im Uhrzeigersinn gegen den Amboß 7, so daß der Netztrenner das Netz N abtrennt.

Der Stelltrieb M ist zwischenzeitlich aus der Endposition 23" in die Nullposition 23° zurückgekehrt, so daß die Sperrklinke 27 unter der Kraft der Feder 37 zum Fangen der Nase 36 bereitsteht. Über die Steuervorrichtung C kann auch der Rückholer 19 bzw. ein diesem zugeordnetes Steuerventil angesteuert werden, damit der Rückholer 19 über das Stellglied 16 die Messerwelle 10 entgegen dem Uhrzeigersinn dreht und die Messerhebel 9 unter Spannen der Feder 12 so weit verschwenkt, bis die Sperrklinke 27 hinter die Nase 36 fällt. Dann wird der Druck des Rückholers 19 entlastet, so daß dieser in die Fig. 2 gezeigte Stellung zurückkehrt. Die Bindevorrichtung B ist für einen neuen Bindevorgang bereit.

Die Zuführlänge könnte auch an einem anderen, sich mit den zugeführten Netz N bewegenden Element abgegriffen werden. Der Stelltrieb M könnte auch auf andere Weise an der Sperrklinke 27 angreifen, und nicht indirekt unter Vermittlung des Stellhebels 21. Der Rückholer 19 könnte bei umgekehrter Einbaulage des Stellgliedes 16 die Messerhebel 9 auch durch Ausfahren spannen.

In Fig. 7 ist bei einer alternativen Ausführungsform eine durch die Steuervorrichtung C geführte Vorrichtung 48 gezeigt, die die Sperrklinke in die Freigabestellung verstellt, sobald eine vorbestimmte Länge des Netzes N um den Rundballen gewickelt worden ist. Die Vorrichtung 48 wird dadurch aktiviert, daß der Stelltrieb M die Einzugswalze W mit einem Verstellhub in die Position 23' angekuppelt hat. Beispielsweise über die Komponenten 38, 39 wird dann die abgezogene Länge des Netzes gemessen, und betätigt die Vorrichtung 48 schließlich die Sperrklinke 27, sobald die gewünschte Länge erreicht ist. Der Stelltrieb M braucht hierfür nicht den Verstellhub zu 23" auszuführen. Es wäre jedoch auch denkbar, die Aktiverung der Vorrichtung 48 durch die Rückkehr des Stelltriebes M in die Nullstellung 23° vorzunehmen, und erst dann mit der Netzlängenmessung zu beginnen, weil zu diesem Zeitpunkt sicher ist, daß der Rundballen sich selbsttätig in das Netz einwickelt. Diese Steuerungsvarianten zur Netzlängenbemessung basieren auf einfachen elektronischen Komponenten, so daß kein aufwendiger Mechanismus benötigt wird und Einstellungsänderungen bequem an der Steuerung möglich sind.

## Patentansprüche

1. Rundballenpresse (RP), mit einem eine Preßwalzen (4) aufweisende Ballen-Preßkammer (P) enthaltenden Gehäuse (1), und mit einer Netz-Bindevorrichtung (B) im Bereich einer in die Preßkammer (P) führenden Zuführöffnung, wobei die Bindevorrichtung (B) eine mittels eines Stelltriebs (M) ein- und abkuppelbare Einzugswalze (W) für das Netz (N), einen federgespannten, aus einer zurückgezogenen Bereitschaftsstellung quer durch das Netz (N) in eine Trennstellung bewegbaren Netztrenner (7,8), und eine in Abhängigkeit von der Zuführlänge des Netzes (N) aus einer Sperrstellung in eine Freigabestellung bewegbare Sperrvorrichtung (K) für den Netztrenner (7,8) und dessen Federvorspannung aufweist, **dadurch gekennzeichnet,** daß die Sperrvorrichtung (K) in Abhängigkeit von einem vorbestimmten Verstellhub des Stelltriebs (M) in die Freigabestellung verstellbar ist.

2. Rundballenpresse nach Anspruch 1, **dadurch gekennzeichnet,** daß die Sperrvorrichtung (K) mittels des Stelltriebs (M) in die Freigabestellung verstellbar ist.

3. Rundballenpresse nach Anspruch 1, **dadurch gekennzeichnet,** daß ein vom Stelltrieb (M) getrennter Rückholer (19), vorzugsweise ein Hydraulikzylinder, für das Schlagmesser (8) des Netztrenners vorgesehen ist.

4. Rundballenpresse nach Anspruch 1, **dadurch gekennzeichnet,** daß der Stelltrieb (M) mit der Sperrvorrichtung (K) direkt oder indirekt in bewegungsübertragende Verbindung bringbar ist.

5. Rundballenpresse nach wenigstens einem der Ansprüche 1 bis 3, **dadurch gekennzeichnet,** daß eine mit dem Verstellhub der Verstellvorrichtung (M) zum Einkuppeln der Einzugswalze (W) aktivierbare Vorrichtung (48) zum Verstellen der Sperrvorrichtung in die Freigabestellung in Abhängigkeit von einer vorbestimmten, auf den Rundballen aufgewickelten Netzlänge vorgesehen ist.

6. Rundballenpresse nach wenigstens einem der Ansprüche 1 bis 4, **dadurch gekennzeichnet**, daß der Stelltrieb (M) ein Linearmotoraggregat mit zwischen einer Nullstellung (23°), d.h. Abkuppeln der Einzugswalze (W), einer Kuppelstellung (23'), d.h. Einkuppeln der Einzugswalze, und wenigstens einer Endstellung (23") verstellbar ist, und über den Verstellweg von der Nullstellung (23°) zur Endstellung (23") mit der Sperrvorrichtung (K) in bewegungsübertragende Stellverbindung bringbar ist.

7. Rundballenpresse nach Anspruch 1, **dadurch gekennzeichnet,** daß die Sperrvorrichtung (K) eine beweglich gelagerte Sperrklinke (27) aufweist, die in der Sperrstellung einen Messerhebel (9) des gespannten Netztrenners verriegelt, daß der Stelltrieb (M) mit einem eine Spannrolle (S) tragenden, schwenkbar gelagerten Stellhebel (21) gekoppelt ist, und daß der Stellhebel (21) ein Löseelement (32, 34, 35) für die Sperrklinke (27) aufweist.

8. Rundballenpresse nach Anspruch 7, **dadurch gekennzeichnet**, daß der Stellhebel (21) ein Winkelhebel mit in seiner Beuge gelagerter Riemenspannrolle (S) ist, daß das Löseelement einen U-förmigen Seitenhebel (34) im Bereich der Beuge und an der der Spannrolle (S) abgewandten Seite des Winkelhebels (21) aufweist, und daß der Seitenhebel (34) an seinem der Kopplungsstelle (23) des Winkelhebels (21) mit dem Stelltrieb (M) zugewandten Ende (35) eine Sperrklinken-Steuerkurve (32) trägt.

9. Rundballenpresse nach den Ansprüchen 7 und 8, **dadurch gekennzeichnet**, daß die Sperrklinke (27) ein schwenkbar gelagerter flacher Hebel mit einem hakenförmigen freien Ende (31) ist, das in der Sperrstellung eine Nase (36) am Messerhebel (9) hintergreift und in den Bewegungsweg der Steuerkurve (32) mit dem Stellhebel (21) eingreift, und daß die Sperrklinke (27) durch eine Feder (37) in Schwenkrichtung zur Sperrstellung belastet ist.

10. Rundballenpresse nach wenigstens einem der Ansprüche 3 bis 9, **dadurch gekennzeichnet,** daß der den Rückholer (19) bildende Hydraulikzylinder an einem am Messerhebel (9) oder einer den Messerhebel (9) tragenden Messerhebelwelle (10) befestigten Stellglied (16) angelenkt ist, daß derAnlenkbereich eine Stift-Schlitz-Kupplung (17, 18) mit einem wenigstens dem Arbeitshub des Messerhebels (9) entsprechenden Spiel aufweist.

11. Rundballenpresse nach wenigstens einem der Ansprüche 3 bis 10, **dadurch gekennzeichnet,** daß eine mit dem Stelltrieb (M),gegebenenfalls mit dem Rückholer (19), mit einem Drehmelder (39, 38) der Einzugswalze (W) und mit einem Einschalter (44) verknüpfte, vorzugsweise einen Mikroprozessor (MP) enthaltende, elektronische Steuervorrichtung (C) vorgesehen ist, in der eine einstellbare Zeitschaltung (40) zum Halten des Stelltriebs (M) in der Kuppelstellung (23') sowie eine einstellbare Netzzufuhrlängen-Meßvorrichtung (42) für die Verstellung des Stelltriebs (M) aus der Nullstellung (23°) in die Endstellung (23") vorgesehen sind.

## Claims

1. Roll baler (RP), having a housing (1) which includes a bale pressing chamber (P) provided with pressure rollers (4), and having a mesh binding apparatus (B) in the region of an inlet aperture which leads into the pressing chamber (P), the binding apparatus (B) having a feed roller (W) for the mesh (N), said roller being connectable and disconnectable by means of an adjustable drive (M), a spring-tensioned mesh cutter (7, 8) which is displaceable from a withdrawn standby position transversely through the mesh (N) into a cutting position, and a locking apparatus (K) for the mesh cutter (7, 8) and its initial resilient tension, said locking apparatus being displaceable from a locked position into a release position in dependence on the length of the mesh (N) supplied, characterised in that the locking apparatus (K) is displaceable into the release position in dependence on a predetermined displacement travel movement of the adjustable drive (M).

2. Roll baler according to claim 1, characterised in that the locking apparatus (K) is displaceable into the release position by means of the adjustable drive (M).

3. Roll baler according to claim 1, characterised in that a return mechanism (19), preferably a hydraulic cylinder, which is separated from the adjustable drive (M), is provided for the impact blade (8) of the mesh blade.

4. Roll baler according to claim 1, characterised in that the adjustable drive (M) can be brought into a movement-transmitting connection with the locking apparatus (K) directly or indirectly.

5. Roll baler according to at least one of claims 1 to 3, characterised in that an apparatus (48), which is actuatable with the displacement travel movement of the adjustment apparatus (M) to connect the feed roller (W), is provided to displace the locking apparatus into the release position in dependence on a predetermined mesh length wound onto the baled roll.

6. Roll baler according to at least one of claims 1 to 4, characterised in that the adjustable drive (M) is a linear motor unit which is displaceable between a zero position (23°), i.e. disconnection of the feed roller (W), a coupled position (23'), i.e. connection of the feed roller, and at least one final position (23") and can be brought into a movement-transmitting adjustable connection via the path of displacement from the zero position (23°) to the final position (23") by means of the locking apparatus (K).

7. Roll baler according to claim 1, characterised in that the locking apparatus (K) has a displaceably mounted locking pawl (27), which locks a blade lever (9) of the tensioned mesh cutter in the locked position, in that the adjustable drive (M) is connected to a pivotably mounted control lever (21), which carries a tensioning roller (S), and in that the control lever (21) has a release member (32, 34, 35) for the locking pawl (27).

8. Roll baler according to claim 7, characterised in that the control lever (21) is an angle lever with a belt tensioning roller (S) mounted in its angle, in that the release member has a U-shaped lateral lever (34) in the region of the angle and on the side of the angle lever (21) remote from the tensioning roller (S), and in that the lateral lever (34) carries a locking pawl cam (32) on its end (35) facing the location (23) where the angle lever (21) is connected to the adjustable drive (M).

9. Roll baler according to claims 7 and 8, characterised in that the locking pawl (27) is a pivotably mounted flat lever with a hook-shaped free end (31), which engages behind a projection (36) on the blade lever (9) in the locked position and engages in the path of movement of the cam (32) with the control lever (21), and in that the locking pawl (27) is loaded by a spring (37) in the pivotal direction to achieve the locked position.

10. Roll baler according to at least one of claims 3 to 9, characterised in that the hydraulic cylinder, which forms the return mechanism (19), is pivotally mounted on an adjustable member (16), which is mounted on the blade lever (9) or on a blade lever shaft (10) carrying the blade lever (9), and in that the pivotal mounting region has a pin-and-slot coupling (17, 18) with a clearance corresponding at least to the working stroke of the blade lever (9).

11. Roll baler according to at least one of claims 3 to 10, characterised in that an electronic control apparatus (C) is provided, which is linked to the adjustable drive (M), possibly to the return mechanism (19), to a rotation indicator (39, 38) of the feed roller (W), and to a starting switch (44), and preferably includes a microprocessor (MP), an adjustable timing circuit (40) being provided in said control apparatus to retain the adjustable drive (M) in the coupled position (23'), as well as an apparatus (42) for measuring the mesh lengths supplied being provided to displace the adjustable drive (M) from the zero position (23°) into the final position (23").

## Revendications

1. Presse à balles rondes (RP), avec un boîtier (1) renfermant une chambre de compression de balle (P) présentant des rouleaux de compression (4), et avec un dispositif de liaison par filet (B) au voisinage d'une ouverture d'amenée menant dans la chambre de compression (P), où le dispositif de liaison (B) présente un cylindre de rentrage (W) pour le filet (N) pouvant être embrayé et débrayé au moyen d'une commande de positionnement (M), un séparateur de filet (7, 8) soumis à l'action d'un ressort, déplaçable d'une position d'attente en retrait transversalement à travers le filet (N) en une position de séparation ainsi qu'un dispositif de blocage (K) déplaçable en fonction de la longueur d'amenée du filet (N) d'une position de blocage en une position de libération pour le séparateur de filet (7, 8) et la précontrainte de ressort de celui-ci, **caractérisée en ce** que le dispositif de blocage (K) est déplaçable en fonction d'une course de déplacement prédéterminé de la commande de positionnement (M) dans la position de libération.

2. Presse à balles rondes selon la revendication 1, **caractérisée en ce** que le dispositif de blocage (K) est déplaçable au moyen de la commande de positionnement (M) dans la position de libération.

3. Presse à balles rondes selon la revendication 1, **caractérisée en ce** qu'il est prévu un organe de rappel (19) séparé de la commande de positionnement (M), de préférence un vérin hydraulique, pour le couteau de frappe (8) du séparateur de filet.

4. Presse à balles rondes selon la revendication 1, **caractérisée en ce** que la commande de positionnement (M) peut être amenée en liaison de transmission de mouvement avec le dispositif de blocage (K) directement ou indirectement.

5. Presse à balles rondes selon au moins l'une des revendications 1 à 3, **caractérisée en ce** qu'il est prévu un dispositif (48) apte à être activé par la course de déplacement du dispositif de déplacement (M) pour embrayer le cylindre de rentrage (W), pour déplacer le dispositif de blocage dans la position de libération en fonction d'une longueur de filet prédéterminée, enroulée sur la balle ronde.

6. Presse à balles rondes selon au moins l'une des revendications 1 à 4, **caractérisée en ce** que la commande de positionnement (M) est un appareil à moteur linéaire et est déplaçable entre une position zéro (23°), c'est-à-dire le débrayage du cylindre de rentrage (W), une position d'embrayage (23'), c'est-à-dire l'embrayage du cylindre de rentrage et au moins une position d'extrémité (23") et peut être amené par le trajet de déplacement de la position zéro (23°) à la position d'extrémité (23") en une liaison de positionnement transmettant le mouvement avec le dispositif de blocage (K).

7. Presse à balles rondes selon la revendication 1, **caractérisée en ce** que le dispositif de blocage (K) présente un cliquet d'arrêt (27) logé d'une manière mobile qui, dans la position de blocage, verrouille un levier à couteau (9) du séparateur de filet tendu, en ce que la commande de positionnement (M) est accouplée avec un levier de positionnement (21) portant le rouleau tendeur (S), logé d'une manière pivotante, et en ce que le levier de positionnement (21) présente un élément de relâchement (32, 34, 35) pour le cliquet d'arrêt (27).

8. Presse à balles rondes selon la revendication 7, **caractérisée en ce** que le levier de positionnement (21) est un levier coudé avec un rouleau tendeur de courroie (S) logé dans son pli, en ce que l'élément de relâchement présente un levier latéral (34) en forme de U au voisinage du pli et au côté du levier coudé (21) éloigné du rouleau tendeur (S), et en ce que le levier latéral (34) porte à son extrémité (35) orientée vers l'emplacement d'accouplement (23) du levier coudé (21) avec la commande de positionnement (M) une came de commande (32) du cliquet d'arrêt.

9. Presse à balles rondes selon les revendications 7 et 8, **caractérisée en ce** que le cliquet d'arrêt (27) est un levier plat logé d'une manière pivotante avec une extrémité libre (31) en forme de crochet qui, en position de blocage, passe derrière un ergot (36) au levier à couteau (9) et s'engage dans le trajet de déplacement de la came de commande (32) avec le levier de positionnement (21), et en ce que le cliquet d'arrêt (27) est chargé par un ressort (37) dans la direction de pivotement vers la position de blocage.

10. Presse à balles rondes selon au moins l'une des revendications 3 à 9, **caractérisée en ce** que le vérin hydraulique constituant l'organe de rappel (19) est articulé à un organe de positionnement (16) fixé au levier à couteau (9) ou à un arbre de levier à couteaux (10) portant le levier à couteau (9), et en ce que la zone d'articulation présente un accouplement à tige et à fente (17, 18) avec un jeu correspondant au moins à la course de travail du levier à couteaux (9).

11. Presse à balles rondes selon au moins l'une des revendications 3 à 10, **caractérisée en ce** qu'il est prévu un dispositif de commande électronique (C) lié avec la commande de positionnement (M), le cas échéant avec l'organe de rappel (19), avec un indicateur de rotation (39, 38) du cylindre de rentrage (W) et avec un interrupteur (44), comportant de préférence un microprocesseur (MP), dans lequel sont prévus une minuterie réglable (40) pour maintenir la commande de positionnement (M) dans la position d'accouplement (23') ainsi qu'un dispositif de mesure (42) de la longueur d'amenée de filet réglable pour le déplacement de la commande de positionnement (M) de la position zéro (23°) dans la position d'extrémité (23").
